Europäisches Patentamt

(19) **European Patent Office**

Office européen des brevets

(11) Publication number: **0 074 280**

**A2**

(12) # EUROPEAN PATENT APPLICATION

(21) Application number: **82304743.6**

(22) Date of filing: **09.09.82**

(51) Int. Cl.³: **B 29 C 25/00**
**H 02 G 15/18**

(30) Priority: **09.09.81 US 300522**

(43) Date of publication of application:
**16.03.83 Bulletin 83/11**

(84) Designated Contracting States:
**AT BE CH DE FR IT LI NL SE**

(71) Applicant: **RAYCHEM CORPORATION**
**300 Constitution Drive**
**Menlo Park California 94025(US)**

(72) Inventor: **Molinari, Robert J.**
**150 West Edith 3**
**Los Altos California 94022(US)**

(72) Inventor: **Parker, Robert**
**34 rue Démidoff**
**Alamo California 94507(US)**

(72) Inventor: **Ratzlaff, Thomas D.**
**319 Haight Street**
**Menlo Park California 94025(US)**

(72) Inventor: **De Blauwe, Francis Josef Anna M.C.**
**Grotendries 16**
**B-3212 Lubbeek(BE)**

(74) Representative: **Jones, David Colin et al,**
**RAYCHEM LIMITED Morley House 26 Holborn Viaduct**
**London E.C.1.(GB)**

(54) **Recoverable closure.**

(57) A substrate 4 enclosed for environmental or other protection by a sheet 1 of plain, preferably recoverable, material. The sheet 1 is wrapped around the substrate 4 and closed by a method which allows the diameter of the resulting sleeve to be chosen at will so that the sheet can be cut to length in the field. The method involves the following steps;

(i) wrapping a plain sheet 1 around the substrate 4;

(ii) placing a first support 4 within the resulting sleeve adjacent at least a first edge portion of the sleeve; and

(iii) either placing a first fastening means over the support 4 so as frictionally to engage opposing edge portions 3 of the sheet 1 therebetween, or placing a second support within the sleeve spaced along the sleeve from the first support and frictionally engaging respective edge portions of the sleeve between respective first and second supports plus fastening means and securing the first fastening means and support relative to the second fastening means and support.

Fig.1.

MP0781COM

RECOVERABLE CLOSURE

This invention relates to a wrap-around article for enclosing a substrate.

Wrap-around articles may be used to form enclosures for elongate substrates, such as joints in telecommunications cables, to provide environmental sealing, electrical insulation or mechanical protection. Such articles will in general comprise sleeves which initially are large enough easily to enclose the substrate, but which are then closed into close contact with the substrate to provide sealing. The need for precise tolerances can be avoided by the use of suitable closure mechanisms and further by the use of recoverable materials. Recovery will generally be shrinking, and this is conveniently initiated by heating.

Heat-recoverable articles, especially heat-shrinkable articles usually recover on heating towards an original shape from which they have previously been deformed, but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962; 3,086,242 and 3,957,372. As is made clear in, for example, U.S. Patent 2,027,962, the original dimensionally heat-stable form may be a transient form in a continuous process in which, for example, an extruded tube is expanded, whilst hot, to a dimensionally heat-unstable form, but in other applications, a preformed dimensionally heat stable article is deformed to a dimensionally heat unstable form in a separate stage.

MP0781COM

In other articles, as described, for example, in British Patent 1,440,524, an elastomeric member such as an outer tubular member is held in a stretched state by a second member, such as an inner tubular member, which, upon heating, weakens and thus allows the elastomeric member to recover.

Where the substrate to be enclosed by the article has a free end, the article may be tubular since it can be slid over the free end and then recovered sealed to the substrate. However, there are many instances where the ends of the substrates are not accessible or, if accessible, where it is undesirable to displace them from their original positions. Repair to a telephone cable splice is such an instance: here there may be many thousands of wire connections, each of which would have to be broken and remade if a tubular article were to be used to provide the outer encapsulation.

Tubular articles may also be difficult to use where space is limited. Repair to cables or cable splices often have to be performed in a man-hole where installation of a tubular article over the cable would be difficult if the desired length of encapsulation were more than, say, one third of the width of the man-hole.

In order to overcome these problems of tubular articles, wrap-around articles have been developed. In this context, a wrap-around article is a sheet of material which can be wrapped-around the substrate to be protected, held by some means in the wrapped configuration, and then sealed to the substrate. In more sophisticated products the wraparound article (called a wraparound sleeve due to its final form) may be coated with an adhesive, and an internal support may be provided to protect the substrate against heat, moisture or mechanical damage.

MP0781COM

The problem then is to find satisfactory fastening means to hold the sleeve in its wrapped configuration during, and if necessary after, recovery or other sealing, yet allow the sleeve sufficient flexibility that it can be sealed over a substrate of non-uniform size. Recoverable sheets generate large forces on recovery tending to cause the separation of the sheet edges, which poses difficult design problems generally unsolved by the prior art. These problems are compounded by other factors, such as, the lack of protection of the substrate under the fastening means and the possibility of air being trapped thereby creating a channel leak path through which water may penetrate and corrode or electrically short-out the substrate to be protected or insulated. Typically such fastening means are mechanical in nature and comprise, for example, rigid clamps, pins or channel members which co-operate with suitably shaped moulded or extruded protuberances adjacent to the overlapping edges of the heat-recoverable sheet. In other applications, however, the sheet may be held in the wrapped configuration during recovery by means of an adhesive which may, in some cases, be applied on site. These possibilities will now be considered in more detail.

An early proposal (US specification 3379218) was to provide a recoverable sleeve with buttons and co-operating holes, by means of which opposing edges of the sleeve could be joined together after the sleeve is wrapped around a substrate. This type of closure is rather complex to produce, and although generally satisfactory can be difficult to use where the object to be covered is irregular. It is preferably manufactured by moulding, which requires the expense of cutting a mould for each size of sleeve.

The classic solution is disclosed in UK patent specification 1155470, which together with other specifications referred to is incorporated herein by reference. This, the so called rail and channel closure, provides a tubular member having a ridge extending along its outer surface. The ridge and the member are longitudinally split, and the ridge halves have an undercut region, thus giving them their preferred rail shape. A channel member is used to keep the ridge halves together and thus to keep the member in its wrapped configuration. A closure of this type is disclosed in UK specification 2019123 which is a multi-part construction where the ridges are formed from two discrete longitudinal clamping strips into each of which an edge of the recoverable sleeve fits. The clamping strips have undercut profiles for receiving an outer channel. A sealing strip, I-shaped in cross-section, is provided between the abutting clamping strips, making a total of five components. The system is likely to benefit from a self-tightening action on recovery, but could require skill for proper assembly. Rail and channel closures have found wide application, for example in the pipeline and telecommunications industries, and are generally well accepted. They do however require careful manufacture since the ridge halves must abut nicely, and the channel and ridges must be a precise size if they are to be easily installed and also are to hold the assembly tightly together.

An alternative method of holding a sleeve in the wrapped configuration is to bond it at an overlap, as disclosed in US patent specification 4200676. A disadvantage is that an additional patch over the lap joint may be needed to prevent peeling. This solution is ideal where recovery ratios are small and the substrates are large, for instance in the use of sleeves in the corrosion protection of pipe joints. For higher recovery forces, for tighter radii of curvature and for irregular substrates, a stronger closure system is to be preferred. Other adhesive systems have been proposed, but bonding to polyolefins (which are preferred sleeve materials) can be a problem for many applications in dirty environments.

A further proposal has been made in UK patent specification 2054781 where a series of metal catches are attached to opposite edges of a recoverable sheet. The catches are attached by bending part of each around a thickened edge portion of the sheet. The catches on one edge of the sheet are attached to those on the other edge by a simple mechanical locking system, the male and female components of which are stamped into the material of the catches. The system involves a large number of parts, due to the large number of catches required, and pre-assembly of the catches to the sheet must be carried out in addition to the awkward operation of connecting together the catches themselves. The arrangement has the disadvantage that the thickened edges of the sleeve are likely to pull out of the bent metal catches under the action of heat and recovery force. Many other mechanically interlocking systems of various complexity have been proposed. All such systems would be difficult and expensive to manufacture continuously, and require a certain amount of skill and patience in the field.

US specification 4219051 discloses what has become known as the Omega-closure, and the same idea is proposed in OLS 2820191 and OLS 2927878. Here a recoverable wrap-around sleeve has first and second substantially parallel elongate ridges projecting from the same surface of the sheet, and spaced apart in the principal direction of recovery of the sheet. Instead of the ridges being held adjacent by a channel (as described above), they are interlockable by snapping one within the other. In cross-section the

MP0781COM

ridges are preferably Omega-shaped, hence the name. The ridges may be maintained in interlocking relationship by means comprising either an internal support for the inner ridge, or a fastening device that surrounds at least a portion of the outer ridge, or preferably both. The internal support referred to can be dispensed with if the inner ridge is of solid material, rather than a hollow Omega in cross-section.

The Omega closure was developed as a simple design that could be easily produced by extrusion, did not require close tolerances, and could be easily assembled. UK specification 1561125 concerns itself with ways in which the profiled recoverable sheet can be produced, and in general terms, the sheet is said to be deformed to produce the Omega ridges and to be recoverable at least subsequent to the process of deformation.

Examples of ways by which this deformation can be effected are then discussed. A heat recoverable tube may be cut longitudinally to provide a dimensionally heat unstable sheet, two opposite edges of which may be placed in a heated mould and profiled under vacuum to form the Omega-shaped ridges.

Alternatively, a tube may be formed, cross-linked if necessary, and provided with a pair of generally parallel ridges before expansion and cutting into a sheet. The sheet, it is said, may be made in one step by moulding it with the ridge and cross-linking it in the mould, the cutting process being eliminated and the expansion step being carried out later.

In emphasising the illustrative nature of these methods, UK specification 1561125 goes on to say that so long as the sheet is heat-recoverable and is provided with interconnectable ridges any manufacturing technique or sequence may be used.

A characteristic of all the mechanical systems discussed in that any one sleeve will produce only one unrecovered sleeve diameter, thus limiting the sizes of substrate over which it can be used. What would be desirable is a method of producing a wrap-around closure where sleeve diameter was not restricted by the need to prefabricate as part of the sleeve a closure mechanism in the factory. This would allow sheet to be cut to length on site.

We have now discovered that except for sleeves of exceptional thickness and rigidity a closure having the basic Omega geometry can be produced from plain sheet.

Thus the present invention provides a method of enclosing a substrate, which comprises:

(i) wrapping a plain sheet around the substrate;

(ii) placing a first support within the resulting sleeve adjacent at least a first edge portion of the sleeve; and

(iii) either placing a first fastening means over the support so as frictionally to engage opposing edge portions of the sheet therebetween, or placing a second support within the sleeve spaced along the sleeve from the first support and frictionally engaging respective edge portions of the sleeve between respective first and second supports plus fastening means and securing the first fastening means and support relative to the second fastening means and support.

By plain sheet, we simply mean sheet that has no cooperating ridges or protuberances in that part used in the closure region;

the sheet may have other non-uniformities, such as dimples or valves etc, elsewhere.

In a preferred embodiment, the present invention provides a method of enclosing a substrate, which comprises:
(a) forming around the substrate a tubular sleeve by overlapping the longitudinal edges of a plain sheet of recoverable material;
(b) placing longitudinally within the sleeve an elongate support;
(c) deforming the overlapping thicknesses of material circumferentially around the support,
(d) frictionally securing the extent of overlap by installing over the material a fastening device to maintain it in its deformed state around the support; and
(e) recovering the material.

In another preferred embodiment, the present invention provides a method of enclosing a substrate, which comprises:
(a)  providing a plain sheet having opposing edge portions;
(b)  providing one or more plain sheet closure devices for holding together the opposing edge portions of said plain sheet, each plain sheet closure device comprising:
(i)  a first frictional gripping element;
(ii)  a second frictional gripping, said first and second elements each having:
(1)  a channel member having a slit, which slit is sufficiently wide to accommodate the thickness of said plain sheet and extends along the length of said channel member; and
(2)  a rod member which is  positionable within said channel member and when so positioned, cooperates therewith to provide a conduit therein between and to apply frictional forces to one end of the plain sheet when the end has been inserted through said slit and is in position between the rod member and the channel member; and

(iii) a means for interengaging said first and second gripping elements;

(c) inserting one edge of said sheet through the first frictional gripping element of each closure device and inserting the opposing edge of said flat sheet through the second frictional gripping element of each closure device;

(d) wrapping said plain sheet circumferentially around said substrate; and

(e) interengaging said first and second frictional gripping elements.

The first mentioned preferred embodiment, employing a support and a fastening device, will now be described; the other preferred embodiment specifically relating to a rod member and a channel member will be explained later in connection with the drawings. Nonetheless, the greater part of the following general description applies to all embodiments of the invention.

Stages (a) and (b) of the first mentioned preferred embodiment may be carried out in either order, and where the elongate support is positioned first it is preferably attached to the sleeve using a pressure-sensitive or other suitable adhesive. Stage (c) and the installation of the fastening device are preferably carried out substantially simultaneously. Where the support is a rod and the fastening device is a channel (as in the other preferred embodiment) the channel may be slid over the rod bit-by-bit by squeezing the overlapping thicknesses of material around the support, sliding the channel as far as possible, and repeating these steps.

The cross-sectional shapes of the support and of the fastening device are not critical, but it is preferred that they interlock by the support being convex in cross-section, and the fastening device having a necked portion in cross-section, so that they have to be snapped together or so that the fastening device has to be slid over the support. The fastening device may be formed from a recoverable material, for example a metal such as a beta-brass, which allows easy installation and which engages on heating or other treatment.

Excellent fastening of the recoverable material can be achieved using a flat strip, rather than a rod of substantially circular cross-section, as the support. In the final assembled product such a strip would preferably be positioned within, say, a C-shaped fastening device (referred to as a channel) and oriented such that in cross-section it lies substantially parallel to a line bridging the gap in the channel, and thus has longitudinal flexibility. The strip would generally be of greater width than the gap in the channel and, if it maintained its preferred orientation, it would not fall out of the channel, or be pulled out by recovery of the sleeve. One way in which the preferred orientation of strip can be ensured, is by using a strip which is non-linear, for example C-shaped, in cross-section and recoverable so that it reverts to a linear cross-section when the assembled sleeve is itself treated for recovery. A suitable material for the strip is a beta-brass.

The support may possess other features to improve performance or to meet specific design requirements. For example, it may have a knurled or otherwise textured surface to improve grip on the recoverable sheet. Where the substrate to be enclosed by the sheet varies considerably in size or shape along its length, the support is preferably made flexible. One way in which such flexibility can be provided is to fashion a rod by tightly winding spring steel or other resilient material : a support made in this way would have the required resistance to distortion, would have sufficient tensional and compressional strength to enable it to be installed after the channel if desired, but would allow a sleeve to conform closely on recovery to a substrate having a sharp transition.

The fastening device may be provided with a series of notches or holes along its length to increase its flexibility. Alternatively, flexibility may be achieved by fashioning the device from wire, as disclosed in UK patent publication 2069591 or by employing a flexible backbone carrying a series of more rigid clamps as disclosed in UK patent application 8108046. The degree of flexibility required will, of course depend on the substrate that is to be enclosed: splices in multi-conductor telephone cables taper considerably down to the cables themselves, and require a reasonably flexible fastening device for easy, reliable installation.

The fastening device will generally become a permanent part of the enclosure once installed, there being no necessity to remove it. Nonetheless, the primary function of the fastening device is to hold the sleeve closed during recovery, and where an adhesive is present on the sleeve (preferably activated by heat where the sleeve is heat recoverable), it will usually be the adhesive that holds the sleeve closed during the life-time of the product. It can be seen therefore that one could use a re-useable tool instead of a permanent fastening device. UK patent 1597470 discloses a suitable tool.

Suitable materials for the fastening device include the beta-brass mentioned above, stainless steel, aluminium, a recoverable plastics material and glass fibre reinforced thermosets.

The support, which as mentioned above is preferably a simple rod, may be made of metal, heat-resistant plastics, wood or other suitable material. In some circumstances it may be desirable that the support and the fastening device act as a heat sink so that any heat that the assembly may be subjected to does not unduly soften the material at the overlay and thus make it liable to pull apart on recovery.

The sheet of the present invention is advantageously provided on the surface which in use will be adjacent to the substrate with a sealant which may be, for example, a mastic, or a hot-melt or other heat-activatable adhesive. The sheet may be provided on its outer surface with thermochromic markings which indicate when the sheet has received sufficient heat to recover it or to activate an adhesive.

An advantage of this invention is that it allows a single type of sheet to be supplied to cover a wide range of sizes of substrate. A considerable reduction in inventory can already be achieved by the use of high recovery ratios, since a sleeve can be used to cover substrates over almost the whole range of sizes from unrecovered diameter to fully recovered diameter. Nonetheless, where the sleeve has preformed fastening means, one is presented with a limited range of sizes that can be covered. This is true of the embodiment of UK patent 1155470 that is illustrated in its drawings, and it is also true of UK patent 1561125 to which the assembled product of one embodiment of the present case bears a geometrical resemblance.

Now it is possible to cut recoverable material to length, and what is more, the cut length is not critical. This second point provides an advantage over UK patent specification 2019123 which also uses plain sheet, which can therefore be cut to length. The problem there, however, is that once the material has been cut to length, the size of the tubular sleeve is fixed. Furthermore, each edge of the material has to be inserted in a certain longitudinal clamping strip, a central I-piece has to be installed, and these four components have to be held in position while a channel type fixing member is installed. Some craft-sensitivity is therefore unavoidable.

Installation of the present assembly is much simpler.

Recoverable sheet is cut to approximately the correct length and wrapped around the substrate to provide some overlap, the amount of which depends on the recovery ratio, but is generally not critical, a minimum of about 80mm being preferred for a medium sized sleeve. The amount of overlap can be adjusted by the workman by feel to leave the desired gap between the substrate and the sleeve; if the sleeve is too large the overlap is simply increased, and if it is too small the overlap is reduced. The unrecovered diameter that is chosen will depend on the amount of residual recovery desired, and on the thickness of the sleeve since both thickness and diameter affect the ease with which the closure can be made.

Also, enclosures having non-uniform cross-section can be made. A rectangular sheet, which would produce a cylindrical enclosure if it had preformed parallel closure rails, can be overlapped more at one end to produce a conical or frusto-conical enclosure. Alternatively, a sheet having the shape of a trapezium could be wrapped to form a frusto-conical enclosure having uniform overlap along its length. Enclosures having a wide variety of shapes can be made from sheets of simple shape since the amount of overlap can be varied at will in the field, the constraints normally resulting from a preformed closure mechanism being absent. One instance where an enclosure of non-uniform cross-section is desirable is the environmental sealing of cable splices. A cable splice tends to be fatter than the cables it joins, and a suitable enclosure will therefore have a large central region tapering to two smaller end regions. Where a cylindrical recoverable sleeve is used to provide the sealing, the recovery ratio must be at least as large as the ratio in size between the splice and the cables, in order that the unrecovered sleeve may fit around the splice and be able to shrink tightly onto the cables on recovery. The requirement for a recovery ratio which matches the disparity in size along the length of the substrate can be avoided by forming from recoverable sheet a sleeve of frusto-conical, or of other non-uniform cross-section. Thus, a frusto-conical sleeve whose base is twice the diameter of its top, and whose material has been expanded by a factor of two, will be able to enclose a substrate with an almost four-fold transition in size. A wrap-around frusto-conical sleeve would have been difficult and costly to produce in the past because of the requirement for a non-parallel closure mechanism. Now, however, such an article can be produced using plain sheet, most conveniently using rectangular plain sheet by varying the extent of overlap along the length of the sleeve. This can now be done in the field to produce an enclosure of optimum size for each substrate, generally from a single supply of recoverable sheet.

Where the enclosure is to be used around a telecommunications cable splice or similar substrate, it may be desirable to use a support liner between the splice and the recoverable sleeve. The function of the liner is to prevent damage to the splice by providing mechanical protection and water and heat barriers, and to give the final enclosure a pleasing shape. Such liners can ensure a gentle contour to the splice so that the transition between cable and splice bundle is neither too great nor too sharp. Liners can be made for example from metal half shells, from cardboard laminates and from plastics materials. These types of liners are disclosed respectively in UK patent specification 1431167, 2059873 and 2069773.

A recoverable sleeve may be employed to enclose a branch-off between two or more cables. The problem here is to form individual outlets in the sleeve so proper sealing between the branching cables can be achieved. In UK patent specification 2019120 this is achieved by means of a clip having at least two elongate legs which is positioned over the outer surface of a recoverable sleeve at an end thereof
to form the separate conduits.

## Examples

The invention will now be illustrated by tests done
using sheets of various thicknesses, and closures of various
geometries.

The diameters of the channel and rod, and the size of
the opening in the channel, will be chosen according to the
thickness and flexibility of the recoverable sheet, and
according to the hoop stresses that will be generated on
recovery. A balance has to be struck between ease of assembly
and strength of the closure, for in general a tight fit of
the sleeve in the channel will make assembly difficult but
provide greater resistance to pull-out.

The following data are provided to show the relationship
between the diameters of rod and channel, the size of
channel opening, and the thickness of sheet which are
required for preferred resistance to pull-out and ease of
assembly. These are the more important variables, but there
are others which have a lesser effect: for example, one can
vary the cross-sectional shape of the rod or channel, vary
the surfaces of the sleeve, the rod or the channel, and one
can use sleeves of various flexibility.

Four variables  were chosen for experimentation:
$D_1$ The diameter of the support rod;
$D_2$ The internal diameter of the channel;
T  The width of the throat opening in the channel; and
W  The wall thickness of the sheet.

For three different sheet thicknesses, the values of
$D_1$, $D_2$ and T were varied to determine what values allowed a preferred ease of installation. The experiment was carried out with a 10cm wide sheet of impact grade polypropylene, of rather higher stiffness, known as KMT 600. Where installation was somewhat difficult, the tests were repeated with more flexible sheets, namely Marlex 3802 and Lupolen 1800S. The following two tables cover ranges of the chosen variables where installation was regarded as successful with the more flexible material, or with either material. The results were classified as follows:

    1. Installation easy

    2. Installation fair

    3. Installation difficult, but acceptable

    4. Installation impossible

### Table 1 - KMT 6100

| Experiment | Sheet thickness | Channel | | Rod | Installable? |
|------------|-----------------|---------|---------|---------|--------------|
| | | $T$ | $D_2$ | $D_1$ | |
| A | 0.65 | 3.0 | 6.5 | 3.25 | 3 |
| B | 0.65 | 4.1 | 11.0 | 5.0 | 1 |
| C | 0.65 | 5.2 | 32.5 | 6.5 | 1 |
| D | 1.0 | 4.5 | 10 | 5 | 4 |
| E | 1.0 | 5.2 | 15 | 6 | 2 |
| F | 1.0 | 8 | 50 | 10 | 1 |
| G | 2.0 | 9 | 20 | 10 | 4 |
| H | 2.0 | 12.5 | 34 | 15.5 | 3 |
| I | 2.0 | 16 | 100 | 20 | 1 |

### Table 2 - Lupolen 1800 S

| | | | | | |
|------------|-----------------|---------|---------|---------|--------------|
| J | 0.65 | 3.0 | 6.5 | 3.25 | 1 |
| K | 1.0 | 4.5 | 10.0 | 5 | 1 |
| L | 2.0 | 9 | 20 | 10 | 1 |
| M | 2.0 | 12.5 | 34 | 15.5 | 1 |

The nine experiments of Table 1 were repeated with the material Marlex 3802, which is an MDPE. The results were the same except installtion was slightly more difficult in experiments A and B.

The results of these experiments were used to calculate preferred relationship between the chosen variables. Preferred ranges are:

$$T = 4.5 - 8\ W$$
$$D_1 = 4 - 10\ W$$
$$D_2 = 2 - 5\ D_1$$

Particularly beneficial results are obtained within the following ranges:

$$T = 5 - 6.5\ W$$
$$D_1 = 5 - 8\ W$$
$$D_2 = 2.0 - 3.5\ D_1$$

These narrower ranges allow especially easy installation, give the product a pleasing appearance, while providing excellent resistance to pull-out.

The figures given above were obtained using a channel and rod of circular cross-section; however they will in general apply to rods and channels whose cross-sections are not precisely circular, in which case mean diameters should be taken for the values $D_1$ and $D_2$. Where the cross-sections are substantially non-circular, the values $D_1$ and $D_2$ should both be measured in the same direction, generally in that direction corresponding to the smallest annular gap between the channel and the rod. In this way one can apply the above empirically determined ranges to a wide variety of designs of channel and rod.

The force required to conform the sheet to the configuration required for assembly around a rod and within a channel was then determined. Testing was performed using a modified Instron on the three types of sheet and three thicknesses used above. The samples of sheet used were strips 5cm wide. The two ends of each strip were attached respectively to the upper and lower jaws of the Instron so that the strip described a loop between the jaws, which loop was squashed as the jaws approached one another. Each jaw was modified by attaching to it a plate of height H which ran in the direction of the width of the strip under test. This arrangement caused the strip to be deformed into an Omega shape (the plates pushing the strip together at the necked portion of the Omega), rather than simply squashing the looped strip flat. The separation between the flat parts of the jaws and therefore the width of the bulbous part of the Omega was labelled $D_2$, corresponding to the diameter of the channel in the previous experiment. The previous variable T, the throat or opening in the channel, can now be regarded as $(D_2 - 2H)$. The following tables show the forces required to produce the geometries defined by the given values of H, $D_2$ and T.

### Table 3 KMT 6100

| Experiment | Sheet thickness | H | $D_2$ | $T = D_2-2H$ | Forces |
|---|---|---|---|---|---|
| A' | 0.65 | 1.75 | 6.5 | 3 | 1.5 - 1.7kg |
| B' | 0.65 | 3.45 | 11 | 4.1 | 1.15 - 1.2kg |
| C' | 0.65 | 13.6 | 32.5 | 5.3 | 0.2kg |
| D' | 1.0 | 2.75 | 10 | 4.5 | 2.6 - 2.8kg |
| E' | 1.0 | 5.3 | 17 | 6.4 | 1.85 - 1.95kg |
| F' | 1.0 | 21.0 | 50 | 8 | 0.45kg |
| G' | 2.0 | 5.5 | 20 | 9 | 7.1 - 7.2kg |
| H' | 2.0 | 10.75 | 34 | 12.5 | 5.4kg |
| I' | 2.0 | 41.0 | 100 | 18 | N.M |

### Table 4 Lupolen 1800 S

| J' | 0.65 | 1.75 | 7.0 | 3.5 | 0.65 - 0.75kg |
| K' | 0.95 | 2.75 | 10.0 | 4.5 | 1.0 - 1.2kg |
| L' | 1.9 | 5.5 | 20.0 | 9 | 1.9 - 2.0kg |
| M' | 1.9 | 10.75 | 34.0 | 12.5 | 0.95 - 1.0kg |

### Table 5 Marlex 3802 - MDPE

| | | | | | |
|---|---|---|---|---|---|
| N' | 0.65 | 1.75 | 6.5 | 3 | 1.9 - 2.0kg |
| O' | 0.65 | 3.45 | 11 | 4.1 | 1.2 - 1.6kg |
| P' | 0.65 | 13.6 | 32.5 | 5.3 | 0.2 - 0.3kg |
| Q' | 1.0 | 2.75 | 10 | 4.5 | 2.6kg |
| R' | 1.0 | 5.3 | 17 | 6.4 | 1.2 - 1.45kg |
| S' | 1.0 | 21.0 | 50 | 8 | 0.7 - 1.0kg |
| T' | 2.0 | 5.5 | 20 | 9 | 4.6 - 5.5kg |
| U' | 2.0 | 10.75 | 34 | 12.5 | 2.6 - 2.8kg |
| V' | 2.0 | 41 | 100 | 18 | N.M. |

### The Drawings

The invention will now be further illustrated by the accompanying drawings in which:

Figures 1-7 show various stages in the assembly of different closure mechanisms generally of the first-mentioned preferred embodiment;

Figures 8 and 9 compare the leak paths of a closure of the present invention with an alternative mechanism using plain sheet;

Figures 10-17 show different closure mechanisms generally of the other preferred embodiment referred to above.

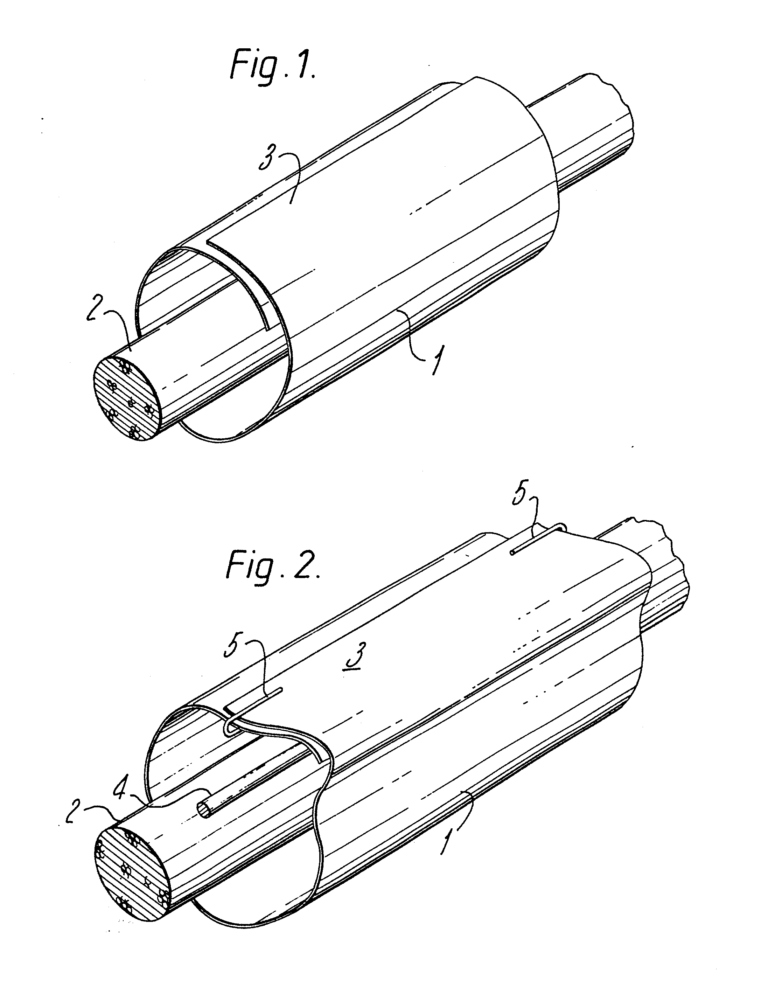

Figure 1 shows a recoverable sheet 1, preferably recoverable over its entire surface, wrapped around a cable, a pipe or other conduit 2 with its longitudinal edges overlapping at 3, to form a tubular sleeve.

In Figure 2 a support, which in this case is a rod 4, is inserted within the sleeve adjacent the overlap. Two fasteners 5 have been used to hold the recoverable material in its wrapped configuration while the installation is completed. These fasteners are not necessary for all but the largest sleeves, it being found that the sleeve can be held in position by hand while the remaining stages are carried out.

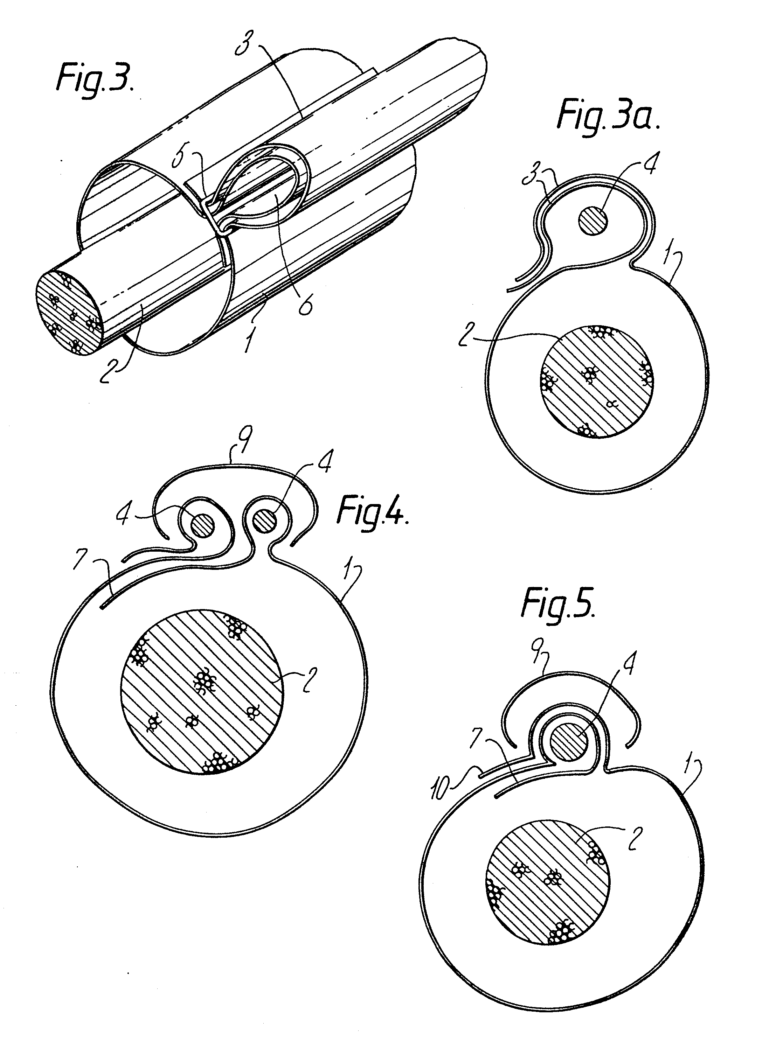

Figure 3 shows an alternative way of proceeding at this stage : instead of fastening two layers of sheet together, all four can be fastened together to form a conduit 6 into which a rod 4 can subsequently be inserted.

In Figure 3a the edges of the sheet have been overlapped in a different way, to produce what could be called a stand-up lap joint. Although this form is not preferred, it can be used where one side of the recoverable material is self-bondable or coated with an adhesive, and the resulting face-to-face bonding is required to reduce the leak path through the closure.

Two support rods 4 are used in the embodiment of Figure 4, one rod being positioned at each edge of the sleeve. This variation may be found preferable for thicker or less flexible sheet where the step of conforming a double thickness of sheet around a single rod may introduce undesirable craft-sensitivity.

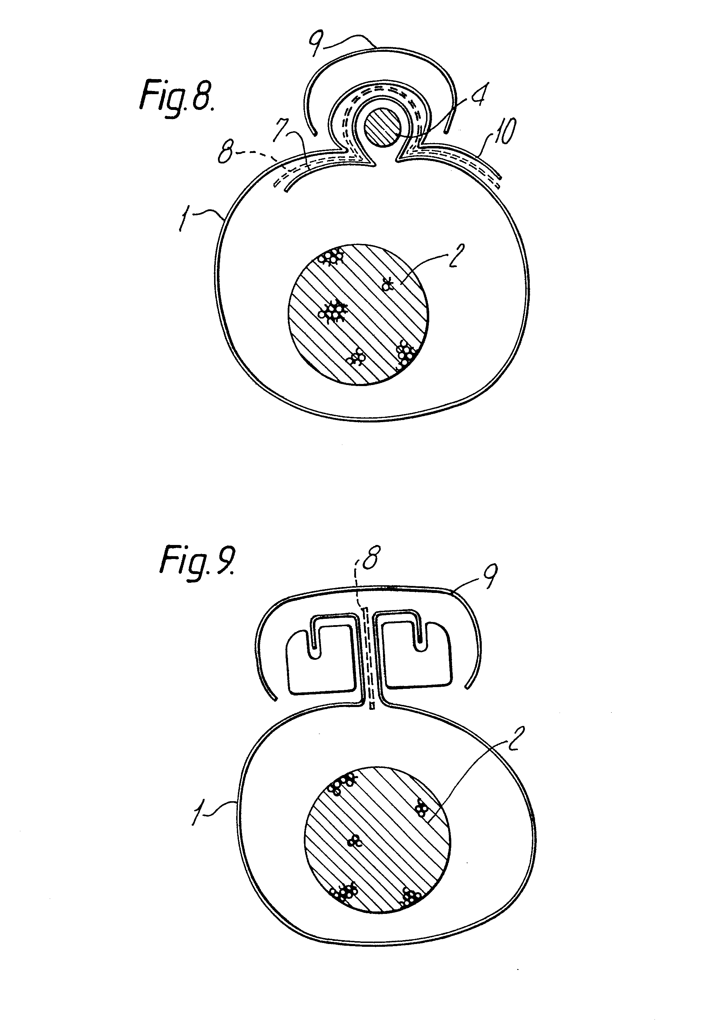

Figures 4 and 5 each show a way of folding the sheet 1 which has a particular advantage. One edge of the sheet, after passing around the rod 4, is folded so as to form a central flap 7 which provides a smooth, closed interior under the closure, and in Figure 4 prevents a direct leak path (line 8 in Figure 9) existing between the two edges of the sheet.

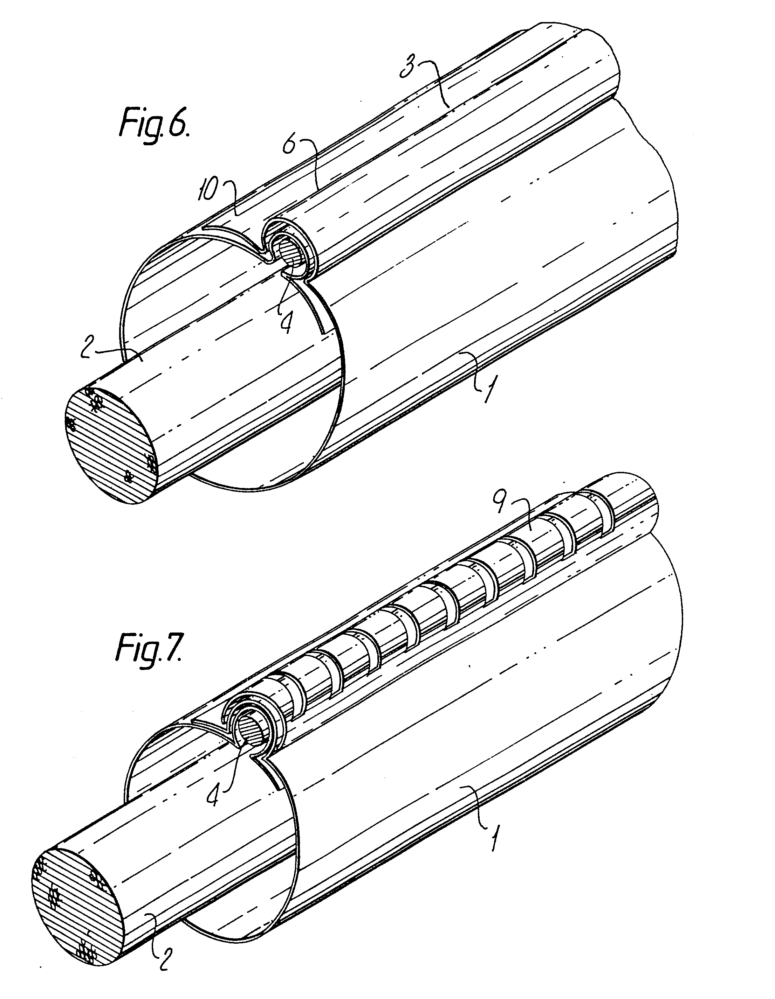

Deformation of the overlapping region around the support is shown in Figure 6. The sheet takes on an Omega shape 6 in this region, although the precise cross-sectional shape will depend on the shape of the support 4. Deformation of the sheet around the support will generally be carried out substantially simultaneously with the installation of
the fastening device, shown fully installed in Figure 7.
Here the fastening device 9 is a channel, of generally
C-shaped cross-section and having slots to increase its
flexibility. The device 9 can be slid lengthwise onto the
Omega-shaped ridge or it can be snapped on laterally.

When the fastening device 9 is in place, the sleeve 1
is recovered thus producing a good seal around the cable 2.
It can be seen that there is no short leak path through the
closure mechanism since the length of the leak path equals
the extent of overlap, which can be chosen to suit the
conditions that the enclosure will be subjected to. This
provides a further advantage over the type of closure
illustrated as one embodiment in UK patent specification
1155470, where some further sealing member may be desirable
such as the I-piece shown in UK patent specification 2019123.
This distinction is illustrated in Figures 8 and 9, where
it can be seen that the leak path (dotted line 9) in Figure
8 can be chosen at will. The inner surface of tubular
sleeve 1 is preferably coated with a mastic or an adhesive,
preferably a heat-activatable adhesive such as a hot-melt or
an epoxy reactive system. In some circumstances it may be
desirable to omit the adhesive coating from the part that will
form the overlapping region in order to obtain increased
flexibility, however this is not preferred since it would
require the recoverable material to be supplied in predetermined
cut lengths. The quality of the seal will also depend on
where in the overlapping region the Omega-shaped ridge is
made: a better seal is obtained if underlying flap 7 is
larger and overlying flap 10 is smaller since flap 7 is
forced against the adjacent sleeve due to the hoop stresses
generated during recovery.

The remaining Figures illustrate the other preferred embodiment referred to where each edge of the sheet is inserted into a closure device, and the closure devices are then interengaged. The steps of inserting the edges, wrapping the sheet around the substrate and interengaging the devices may be carried out in any order, although the order listed is preferred. The order which results in the production of a tubular product which is subsequently installed around the substrate is least preferred.

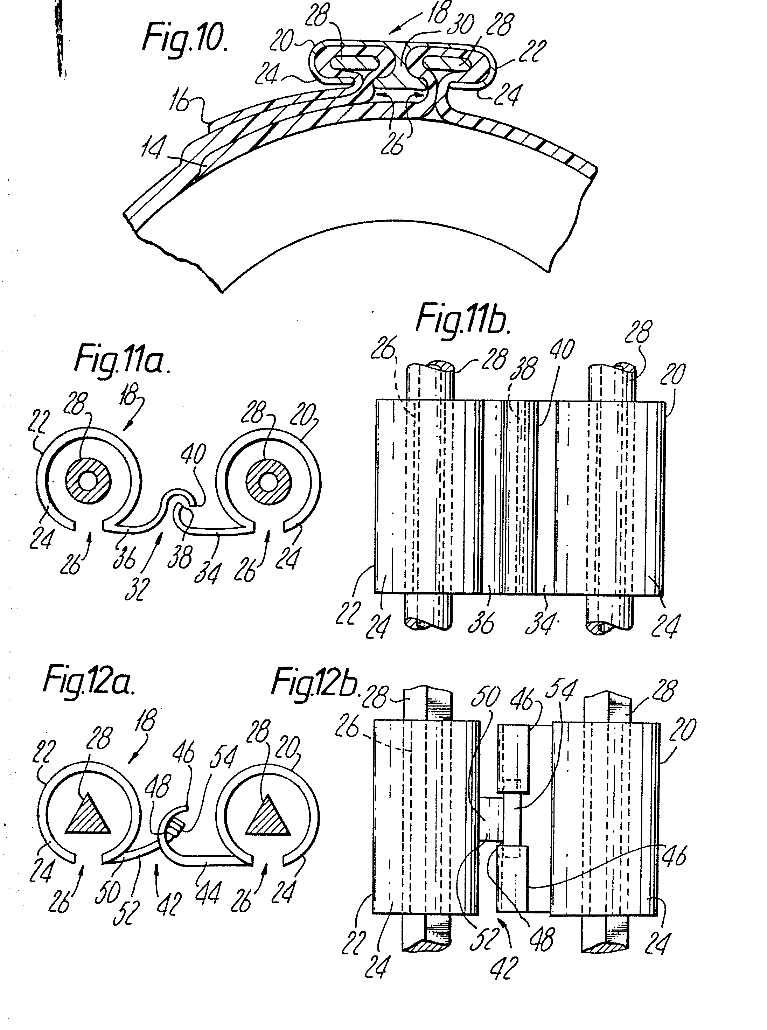

Figure 10 illustrates in partial cross-section a pipe 2 around which has been wrapped a plain sheet 1. The opposing ends 14 and 16 of the plain sheet 1 have been inserted through a closure device 18 according to this invention thereby collectively providing a protective closure. The closure device 18 has a first frictional gripping element 20 and a second frictional gripping element 22. Each frictional gripping element 20, 22 has a channel member 24 (shown here as having but not being limited to an elliptical interior cross-section), which channel members 24 each have a slit 26 (shown as an elongate slit) extending along the entire length of said channel member 24. Each frictional gripping element 20 and 22 also has a rod member 28, which is at least as long as said gripping element 20 or 22 and which is positionable within said channel member 24 and when so positioned cooperates therewith to provide a conduit thereinbetween and to apply frictional forces to one end 14 or 16 of the plain sheet 1. The rod member 28 is shown here as having an elliptical cross-sectional shape so as to correspond to the elliptical cross-sectional shape of the interior of the channel member 24, but which is of smaller cross-sectional area so that the plain sheet 1 is insertable, but is frictionally gripped by an effective frictional fit.

Several methods for assembling the protective closure parts are possible. The rod member 28 may be placed within the channel member 24 and the sheet end 16 inserted through the slit 26 and around the rod member 28, the insertion operation aided by rotating the rod member 28 to help advance the sheet therethrough. Alternately the sheet end 16 may be folded over to form a loop, the loop inserted directly through the slit 26 into the channel member 20 or inserted by sliding the channel member 20 sideways over the looped sheet, followed by pushing the rod member 28 through the loop created by folding the sheet end 16. Moreover, as an additional insertion example, if the slit 26 is at least as wide as the diameter of the rod member 28, then the sheet end 16 may be folded over the rod member 28 and that subassembly pushed or snapped through said slit 26 together.

Figure 10 also shows the gripping elements 20 and 22 as being connected by an integral connecting bridge 30 extending from the outer surface of the first gripping element 20 to the outer surface of the second gripping element 22, thus providing a means for interengaging the gripping elements 20 and 22. The integral connecting bridge 30 permanently joins and holds the gripping elements 20 and 22 in a fixed spatial relationship. Alternately as shown in the later figures, the gripping elements 20 and 22 may have means for interengaging which do not permanently join the elements, but which allow the elements to be engaged and thereby placed in a fixed spatial relationship, or disengaged at will. The ability to disengage and to subsequently re-engage is an asset for protective closure applications where re-entry is advantageous.

The closure devices 18 of this invention are capable of holding together the opposing ends of plain sheets 1, which may be but are not limited to, polymeric sheets, dimensionally-recoverable polymeric sheets, (i.e. those which have a shape memory, such as those which are heat-shrinkable from a stretched heat-unstable configuration to a remembered heat-stable configuration), an elastomeric sheet such as
neoprene, a sheet of metal, a foraminous sheet, a foraminous
sheet having laminated thereto one or more sheets of polymeric
material, a foraminous sheet such as a fabric sheet of woven
fiber glass which has been impregnated, for example, with an
organic material, or a laminated sheet composed of one or
more layers in combination of any of the foregoing. Wrap-
around sleeves of these materials are generally used as
protective closures for environmentally sealing, electrically
insulating and/or strengthening a pipe, conduit, or
cable, and as such generally have layers of mastic or
adhesive, such as a hot-melt adhesive coated thereon.
Although not shown in the drawing, use of such mastic or
adhesive layers is contemplated by this invention.

Recognised and contemplated by this invention
also is that the frictional force requirements will vary
with the user's application specifications and/or the
materials used. Hence it is recognized that the frictional
gripping elements of this invention must be and are
tailorable to the user's application. The geometries of
the closure device elements, the materials used in fabrication (metals or polymers, for example) and the textures
of the surfaces of the various elements, are examples of
variable design factors.

Figure 11 illustrates in cross-section one of
the interengagable closure devices 18 according to this
invention which may be disengaged. The gripping elements
20 and 22 have channel members 24 which are shown as
circular in cross-section and which have slits 26 extending
the length thereof. The rod members 28 are shown as
having a circular cross-section and are hollow. This is
expecially valuable when the rod members 28 or the entire
closure device 18 is fabricated from a polymeric material,
because the hollow rod members 28 may then be quite flexible, which advantage will be discussed later. The means for interengaging the gripping elements 20 and 22 is a mateable clasp 32 (shown as but not limited to being an elongate clasp) having a first clasp portion 34 and a second clasp portion 36, which portions are bent in opposing senses to one another. The first clasp portion 34 extends from the outer surface of the first gripping element 20 toward the second gripping element 22 and bends upwardly away from the elongate substrate at its tip 38. The second clasp portion 36 extends from the outer surface of the second gripping element 22 toward the first gripping element 20 and bends downwardly toward the elongate substrate at its tip 40. When interengaged these two clasp portions (34, 36) form the mateable clasp 32. Once assembled, this clasp 32, if fabricated from appropriate materials, such as a metal which yields, may be crimped at one or more points along its length, thereby permanently joining and holding said gripping elements 20 and 22 in a fixed spatial relationship. Crimping renders the installation permanent, the closure device 18 no longer being disengageable.

Figure 11B is a top view of the closure device shown in Figure 2A. The rod members 28 are shown as extending beyond the extremities of the gripping elements 20 and 22 to demonstrate that the closure devices 18 may be used for more than just a narrow plain sheet or band. Every embodiment of these closure devices 18 may be fabricated to accommodate, with reference to the elongate substrate, plain sheets 1 having any longitudinal width and any circumferential length. It is preferable that the entire length of each end of the opposing sheet ends be in contact with a rod member 28, most preferably the same rod member 28. Where one closure device 18 extends the full longitudinal width of the sheet ends, the rod member 28 will also extend the full longitudinal width. Where several closure devices 18 are spaced along the longitudinal width of the sheet 1, the same rod members are preferably used for all, said rod members 28 then extending the full longitudinal width of the sheet end. The latter arrangement, especially if employed with a flexible rod member, affords improved flexibility to the collective protective closure, which is especially advantageous if large transitions in pipe diameter must be accommodated.

With reference to Figure 12, a cross-sectional view of another embodiment of a closure device 18 according to this invention is shown. A mateable latch 42 provides the means for interengaging the first frictional gripping element 20 and the second frictional gripping element 22. A first latch portion 44 extends from the outer surface of the channel member 24 of the first gripping element 20 toward the second gripping element 22, bends upwardly away from the elongate substrate at its tip 46 and has one notch 48 along its length. The second latch portion 50 extends from the outer surface of the channel member 24 of the second gripping element 22 toward the first gripping element 20 and has a neck portion 52 and a bar member 54. The neck portion 52 extends from the outer surface of the second gripping element 22 and perpendicularly joins the bar member 54 to form a T. The neck portion 48 of the second latch portion 50 is adapted to slide through the notch 48 in the first latch portion 44. A plurality of such mateable latches may be desireable for each closure device. For shorter closure devices 18 having lengths on the order of 5cm (about 2 inches), one mateable latch 42 is believed sufficient for most applications.

With continuing reference to Figure 12, the rod members 28 are shown as having equilaterally triangular cross-sections. Such a non-circular rod member geometry, when combined with a channel member 24 having a circular interior cross-section, for example, increases the frictional forces that a plain sheet inserted through the closure device 18 experiences. The same increase in frictional forces is expected when rod members having circular cross-sections are combined with channel members having non-circular interior cross-sections. Other combinations of geometries are contemplated by this invention although and hence these examples are not to be considered limitating. The elliptical rod member of Figure 10 is a low profile shape and is especially suited for elastomeric sheet materials or others which may be cinched-up, which cinching-up is is accomplished by pulling the sheet tautly through the closure device 18. The triangular rod member shown in Figure 12, or any other cross-sectional shape characterized by angularity, such as, a hexagon, a square, a rectangle, a right triangle, or even a generally round rod member having an axial undercut (shown in Figure 15), etc., may be employed to increase the frictional forces to which the plain sheet inserted through the closure device 18 is subjected. Frictional forces may also be increased by texturing the inner surface of the channel member 24 or by texturing the exterior of the rod member 28, such as by scoring with longitudinal grooves, knurling or scoring a cross-hatched pattern, coating these surfaces with a high-frictional material such as a rubbery elastomer, or gluing or laminating to the surfaces a high-frictional material such as a Velcro (Trade Mark) layer (not shown).

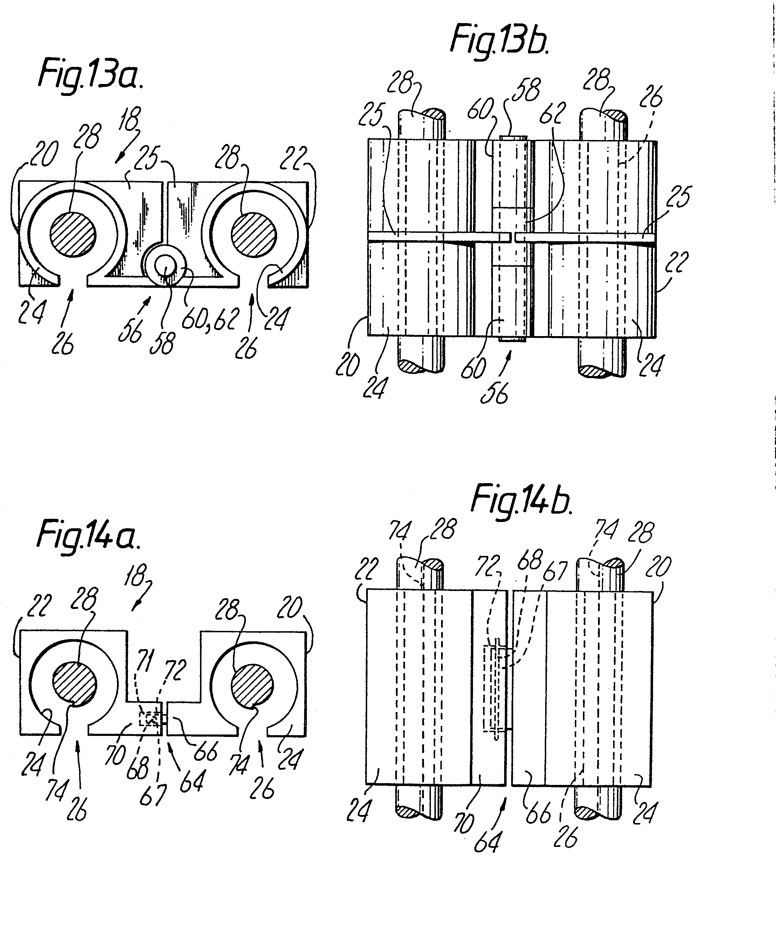

Figure 13 is a cross-sectional view of yet another closure device 18 according to this invention. Stiffening members 25 are shown extending from the outer surfaces of the channel members 24. The means for interengaging the first gripping element 20 and the second gripping element 22 is an interdigitating or hinge joint, having interdigitatable, spaced segments, which have a longitudinal channel therethrough, and a pin 58 insertable through said channel.

The first gripping element 20 is shown as having
two spaced segments 60 attached to the outer surface of
its channel member 24 which faces the second gripping
element 22, although any number of segments is contemplated.
These segments 60 extend in a direction which is parallel
to the slit 26.  The second gripping element 22 is shown
as having one spaced segment 62 attached to the outer
surface of its channel member 24 which faces the first
gripping element 20, although any number of segments is
contemplated.  The segment 62 extends in a direction which
is parallel to the slit 26, the spacing of the segments
60, (shown here as but not limited to cylindrical segments),
allowing interdigitation thereof and allowing permanent
engagement in a fixed spatial relationship by insertion of
pin 58 therethrough.

Figure 13 is a top view of the closure device shown in
Figure 13.  As an example, when the flat sheet is a 0.316cm
(about 1/8 inch) thick sheet of neoprene, the slit 26 may be
0.632cm (about 1/4 inch) wide, the inside diameter of the
channel member 24 may be 1.27cm (about 1/2 inch) and
the outside diameter of the rod member 28 may be 0.632cm
(about 1/4 inch).

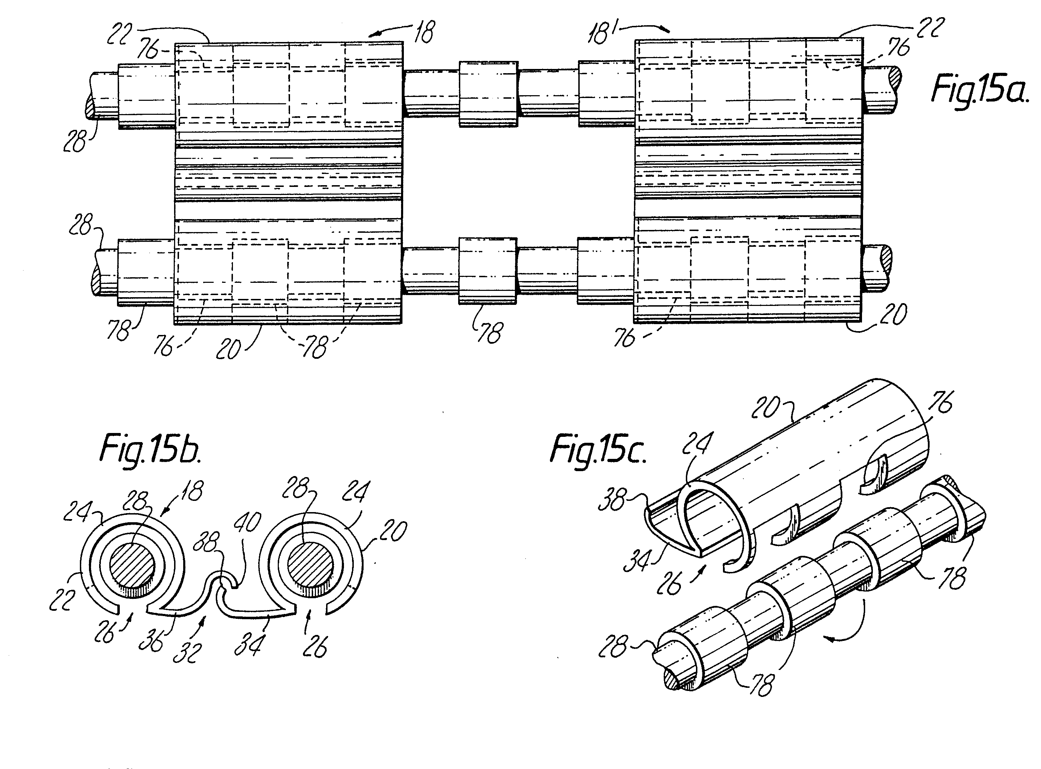

Referring to Figure 14, shown in cross-section is a
snap-lock closure as the means for interengaging the
frictional gripping elements 20 and 22 of a closure device
18 according to this invention.  A male member 66 extends
from the outer surface of the channel member 24 of the
gripping element 20 toward the gripping element 22.  The
channel member 24 is shown as having been machined in
a block of polymeric material, although a variety of
materials and fabrication methods are contemplated by this
invention.  The male member 66 has a protuberance 67 with a barb 68, which barb 68 impedes the removal of the male
member 66 once it is interengaged with a female member 70.
The female member 70 has a cavity 71 with a constricted
aperature 72, through which the protuberance 67 and its
barb 68 barely pass, (i.e. a press-fit) and which constricted
aperature 72 cooperates with the barb 68 of the male
member 66 to impede the removal of the male member 66 once
it is interengaged with the female member 70.  The cavity
71 is shown as a generally rectangular box having a
rectangular aperature 72.  It could be a longitudinal
groove extending parallel to the slit 26 and having a
length of up to the length of said slit 26.  Alternatively
it could take other shapes.  The male member 66 is shown
as a wide rectangular protuberance 67 with a barb 68.
It's width could extend the length of the slit 26.  It
also could assume other shapes provided that they are
compatible with the female member 70.

The rod members 28 are shown as having generally
circular cross-sections, but with an axial undercut 74 as
previously dicussed, for the purpose of increasing the
frictional forces to which the plain sheet inserted through
the closure device 18 is subjected.  More than one axial
undercut 74 may be employed for each rod member 28.  These
axial undercuts 74 will generally extend substantially
along the entire length of the rod member 28.

Figure 14 is a top view of the closure device 18
shown in Figure 14.  One snap-lock closure 64 is shown
although more than one snap-lock closure for each closure
device may be advisable for some applications, such as
when the closure device has a long length.

With reference to Figure 15, a top plan view of
a pair of closure devices 18 and 18' according to this
invention are shown with long rod members 28 having
variable diameters.  The slits 26 of the channel members 24 have one contoured edge 76, shown better in Figure 15, although one or the other or both of the edges of each slit 26 may be contoured. The shape defined by the edge contour shown in Figure 15 as a curved rectangular shape, is such that it coordinates with the shape defined by the rod member 28 having a variable diameter, shown in Figure 15, for example, as spaced cylinders 78 along a rod of smaller diameter. The diameter of the rod members 28 at their widest point exceeds the width of the slit 26 at its widest point and hence the rod members 28 in this embodiment are not insertable directly through the slits 26, but rod members 28 may be inserted laterally through the contoured edges 76 of the gripping elements 20 and 22 respectively. Once inserted, the rod members 28 may be advanced longitudinally within the channel members 24 to a point where they cannot be laterally removed, thereby insuring retention.

Each end 14, 16 of the plain sheet may be folded around a rod member 28 and inserted laterally by pushing the subassembly through the contoured edge 76 and into the channel member 24. Alternately each sheet end 14, 16 may be inserted through the slit 26 of the channel member 24 after the rod member 28 has been inserted laterally through the contoured edge 76 and is already present within the channel member 24, and inserted around said rod member 28, optionally assisted by rotating the rod member 28. As a third option, each sheet end 14, 16 may be inserted through the slit 26 by first folding the sheet end over to form a loop. Once the looped sheet end is present in the channel member 24, a rod member 28 may be pushed or pulled through the subassembly. The term "inserted" is meant to include any of the foregoing acts or combination of acts.

Figure 15 is a cross-sectional view of the pair of closure devices 18 of Figure 15. The means for interengaging the gripping elements 20 and 24 is shown as a mateable clasp 32 as shown and discussed previously for Figure 11, although any of the clasps according to this invention could probably be used interchangably for most applications. The clasps shown are optionally crimpable as previously discussed.

With reference to Figure 16, shown is a perspective view of a plurality of the closure devices 18 according to this invention holding together the opposing ends of a plain sheet 1 which has been wrapped around a pipe 2 having a large transition in diameter. The ends of sheet 1 were inserted through the first and second frictional gripping elements 20 and 22 respectively, of each closure device 18 either by folding the end around the rod member 28 and inserting it through the slit 26, or by folding the end and inserting it through the slit followed by the insertion of the rod member therethrough or by any other insertion method. The plain sheet 1 is then wrapped circumferentially around the elongate substrate, the pipe 2, and the respective first and second frictional gripping elements 20 and 22 for each closure device 18 are interengaged by means of any of the means of interengaging taught by this invention, i.e. clasps, latches, snap-locks, interdigitating joints, etc. The plain sheet 1 is caused to come into intimate contact with the pipe 2 by, for example, cinching-up on the sheet ends 14 and 16, accomplished by pulling them tautly through the closure devices 18. Alternately where an elastomeric plain sheet 1 is employed as part of the protective closure, the elastomeric sheet could have been previously stretched and the intimate contact with the pipe 2 achieved by allowing the elastomeric sheet to relax and shrink into intimate contact therewith. An example of the use of an elastomeric marterial for enclosing an elongate substrate such as a pipe can be found, for example, in U.S. Patent No. 4,135,553 to J.H. Evans et al, herein incorporated by reference. Where the plain sheet 1 is a dimensionally-recoverable polymeric material the plain sheet 1 may be caused to dimensionally-recover, for example, where the dimensionally-recoverable polymeric sheet is heat-shrinkable, the sheet may be caused to come into intimate contact with the pipe 2 by the application of heat.

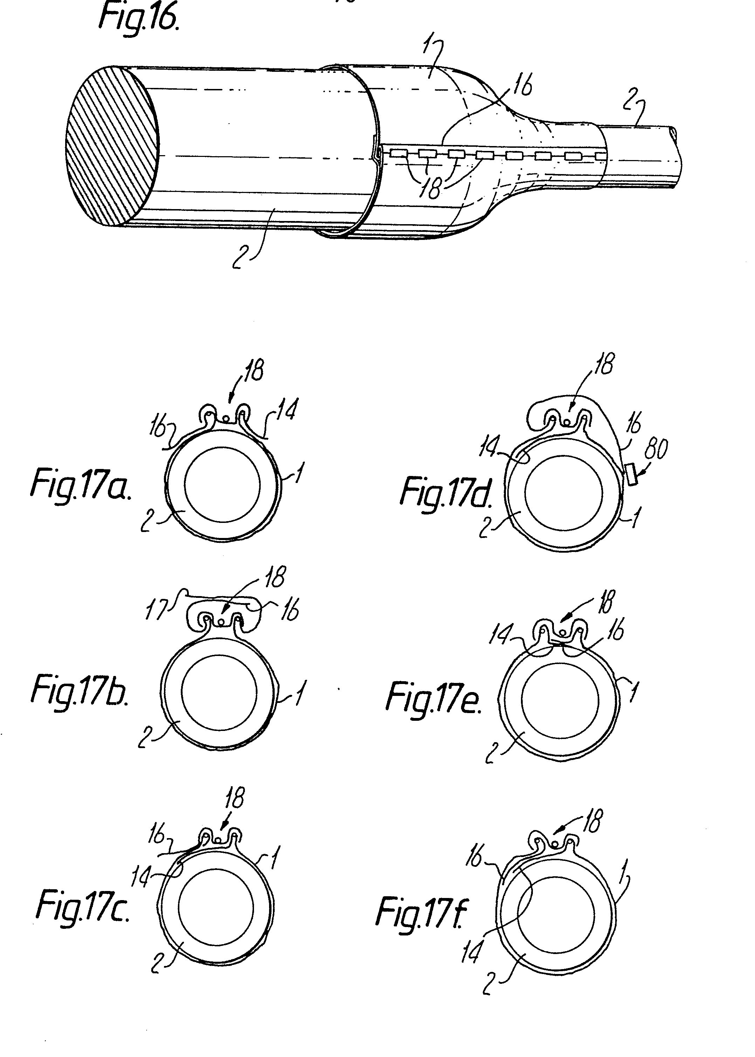

Figure 17, views A through F show in cross-section, a variety of ways in which a plain sheet 1 may be inserted through the closure devices 18 according to this invention. The insertion arrangement in Figure 17 is preferred for applications requiring that the sheet be cinchable, such as where a foraminous sheet (a woven fiberglass sheet) is used to bundle and strengthen a cable or conduit. Once cinched, the ends 14 and 16 as shown in Figure 17 may be brought over the closure device 18 and secured together such as by means of an adhesive. Figure 17 shows a most preferred method of inserting the sheet 1. Sheet end 14 has been underlapped, thereby protecting the elongate substrate underneath of the closure device 18. The opposing sheet end 16 is free and may be drawn over and around the closure device 18 as shown in Figure 17. When sealed by an adhesive or mastic or by means of a patch or tape as shown at 80, the closure device 18 is itself protected from the environment. In Figure 17 both of the sheet ends 14 and 16 have been underlapped, thereby
affording the maximum amount of protection for the elongate
substrate underneath.  Once the plain sheet 1 is in place,
the closure device 18 may be removed, an advantage for
some applications.  Once the closure device 18 has been
removed the protruding portions of plain sheet 1 which
were threaded therethrough may be flattened down and
secured such as by mastic, an adhesive, or by a patch or a
strip of tape.  The insertion arrangement of Figure 17 is
also one which affords a great deal of protection to the
underlying elongate substrate while allowing the closure
device 18 to be removed if the application so warrants,
once the plain sheet is completely in place.

## CLAIMS

1.    A method of enclosing a substrate, which comprises:

(i) wrapping a plain sheet around the substrate;

(ii) placing a first support within the resulting sleeve adjacent at least a firt edge portion of the sleeve; and

(iii) either placing a first fastening means over the support so as frictionally to engage opposing edge portions of the sheet therebetween, or placing a second support withn the sleeve spaced along the sleeve from the first support and frictionally engaging respective edge portions of the sleeve between respective first and second supports plus fastening means and securing the first fastening means and support relative to the second fastening means and support.

2.    A method of enclosing a substrate, which comprises:

(a) forming around the substrate a tubular sleeve by overlapping the longitudinal edges of a plain sheet of recoverable material;

(b) placing longitudinally within the sleeve an elongate support;

(c) deforming the overlapping thicknesses of material circumferentially around the support;

(d) frictionally securing the extent of overlap by installing over the material a fastening device to maintain it in its deformed state around the support; and

(e) recovering the material.

3.    A method of enclosing a substrate which comprises:

(a) providing a plain sheet having opposing edge portions;

(b) providing one or more plain sheet closure devices for holding together the opposing edge portions of said plain sheet, each plain sheet closure device
comprising:

(i) a first frictional gripping element;

(ii) a second frictional gripping, said first and
second elements each having:

(1) a channel member having a slit, which slit is
sufficiently wide to accommodate the thickness of said
plain sheet and extends along the length of said
channel member; and

(2) a rod member which is positionable within said
channel member and when so positioned, cooperates
therewith to provide a conduit thereinbetween and to
apply frictional forces to one edge portion of the
plain sheet when the edge portion has been inserted
through said slit and is in position between the rod
member and the channel member; and

(iii) a means for interengaging said first and second
gripping elements;

(c) inserting one edge portion of said sheet through
the first frictional gripping element of each closure
device and inserting the opposing edge portion of said
flat sheet through the second frictional gripping
element of each closure device;

(d) wrapping said plain sheet circumferentially around
said substrate; and

(e) interengaging said first and second frictional
gripping elements.

4.    A method according to Claim 2, in which stage (c) and
the installation of the fastening device are carried out
substantially simultaneously.

5.    A method according to Claim 2, which, before stage
(b) is carried out, includes maintaining the material in its
tubular form by means of at least one fastener which holds
together the overlapping thicknesses at an end portion of
the sleeve.

6.    A method according to Claim 2, which additionally comprises installing a liner around the substrate, the tubular sleeve then being formed around the liner.

7.    A method according to Claim 2, in which the material is heat-recoverable, and has on a surface that will be inward facing in the tubular configuration a heat-activatable adhesive; stage (e) comprising heating to cause recovery and activation of the adhesive.

8.    A method according to Claim 2, in which the substrate is a cable or a cable splice.

9.    A method according to Claim 2, in which the support is a rod having a mean diameter of from 4-10 times the thickness of the sheet.

10.    A method according to Claim 2, in which the fastening device is an open channel which in use extends along the tubular sleeve, and has a neck in cross-section for engagement with the elongate support, thus resisting lateral separation of the support and fastening device.

11.    A method according to Claim 10, in which the width of the opening in the channel is from 4.5-8 times the thickness of the sheet.

12.    A method according to Claim 10, in which the internal diameter of the channel is from 2-5 times the mean diameter of the support, the support being a rod.

13.    A method according to Claim 2, in which the substrate is of non-uniform cross-sectional size, and stage (a) comprises forming around the substrate a sleeve of non-uniform cross-sectional size by overlapping the longitudinal edges of a substantially rectangular plain sheet of recoverable material such that the extent of overlap varies along the length of the substrate.

14. A method according to Claim 3, which further comprises the step of causing the plain sheet to come into intimate contact with said elongate substrate.

15. A method according to Claim 14, in which the plain sheet is comprised of a sheet of dimensionally-recoverable polymeric material which causes said plain sheet to come into intimate contact with said elongate substrate on dimensional recovery.

16. A method according to Claim 15, in which the dimensionally-recoverable polymeric sheet is heat-shrinkable and wherein the sheet is caused to come into intimate with said elongate substrate by the application of heat.

17. A method according to Claim 14, in which the plain sheet is caused to come into intimate contact with said elongate substrate by pulling the sheet until taut through said flat sheet closure devices.

18. A method according to Claim 14, in which the plain sheet is comprised of an elastomer, which method further comprises stretching said elastomer, and causing said stretched elastomer to come into intimate contact with said substrate by allowing said elastomer to relax.

19. An assembly for enclosing a substrate, which comprises:
   (a) a plain sheet of recovrable material, where longitudinal edges can be overlapped to form a tubular sleeve around the substrate;

   (b) an elongate support which can be placed within the tubular sleeve between the overlapping thicknesses of the material and the substrate; and

(c) a fastening device which can hold the overlapping thicknesses of material circumferentially around the support.

20.  An assembly according to Claim 19, in which the fastening device is an open channel.

21.  An assembly according to Claim 20, in which the width of the opening in the channel is from 4.5-8 times the thickness of the sheet.

22.  An assembly according to Claim 19, in which the support is a rod.

23.  An assembly according to Claim 22, in which the mean diameter of the rod is from 4-10 times the thickness of the sheet.

24.  An assembly according to Claim 20, in which the internal diameter of the channel is from 2-5 times the mean diameter of the support, the support being a rod.

25.  An assembly according to any of Claims 19, which additionally comprises a liner which can surround the substrate within the tubular sleeve.

26.  An assembly according to Claim 19, which additionally comprises at least one fastener which can hold together the overlapping thicknesses during installation of the assembly.

27.  A plain sheet closure device for holding together the opposing end portions of a plain sheet to be wrapped around a substrate, comprising:

        (a)  a first frictional gripping element;

        (b)  a second frictional gripping element, said first and second elements each having:

 ( i) a channel member having a slit, which slit is sufficiently wide to accommodate the thickness of said flat sheet and extends along the length of said channel member; and

 (ii) a rod member which is positionable within said channel member and when so positioned, cooperates therewith to provide a conduit thereinbetween and to apply frictional forces to one edge portion of the plain sheet when the edge portion has been inserted through said slit and is in position between the rod member and the channel member; and

 (c) a means for securing said first and second frictional gripping elements relative to one another.

28. A closure device according to Claim 1, in which the means for securing said first and said second frictional gripping elements comprises an integral connecting bridge extending from the outer surface of the first gripping element to the outer surface of the second gripping element, thereby permanently joining and holding said gripping elements in a fixed spatial relationship.

29. A closure device according to Claim 27, in which the means for interengaging said first and second frictional gripping elements comprises a mateable clasp having a first clasp portion and a second clasp portion, which portions are bent in opposing senses to one another, said first clasp portion extending from the outer surface of the first gripping element toward the second gripping element and bending upwardly away from the substrate, said second clasp portion extending from the outer surface of the second

0074280

gripping element toward the first gripping element and bending downwardly toward the substrate, thereby forming said mateable clasp.

30. A closure device according to Claim 29, in which the mateable clasp is crimpable at one or more points along its length after said clasp portions are interengaged, thereby permanently joining and holding said gripping elements in a fixed spatial relationship.

31. A closure device according to Claim 27, in which the means for interengaging said first and second frictional gripping elements comprises at least one mateable latch having a first latch portion and a second latch portion, said first latch portion extending from the outer surface of the first gripping element toward the second gripping element, bending upwardly away from the elongate substrate and having a notch along its length, said second latch portion having a neck portion and a bar member, said neck portion extending from the outer surface of the second gripping element toward the first gripping element, perpendicularly joining said bar member, and being adapted to slide through said notch, said bar member extending in a direction which is substantially parallel to the length of said second gripping element.

32. A closure device according to Claim 27, in which the means for interengaging said first and second frictional gripping elements comprises a hinge having two parts pivotally connected by a pin.

33. A closure device according to Claim 27, in which the means for interengaging said first and said second frictional gripping elements comprises a male and a female member, the male member being a snap fit within the female member.

34. A closure device according to Claim 27, in which at least one of the channel members and/or at least one of the rod members has a circular cross-section.

35. A closure device according to Claim 27, in which one only of a channel member plus the corresponding rod member has a non-circular cross-section.

36. A closure device according to Claim 27, in which at least one of the channel members and/or at least one of the rod members has a non-circular cross-section.

37. A closure device according to Claim 27, in which the rod member is flexible.

38. A closure device according to Claim 27, in which the slit in at least one of the channel members has at least one contoured edge and wherein the rod member positionable with said channel member having said at least one contoured edge, has a variable diameter which exceeds the width of the slit at its widest portion and which defines a shape, which shape is insertable laterally through said edge contour and which, once inserted, may be advanced longitudinally within the channel member to a point where it cannot be laterally removed, thereby to ensure retention.

39. A closure device according to Claim 27, in which at least a portion of the surface of the rod and/or of the channel member is textured.

40. An assembly for enclosing a substrate, which comprises:

    (a) a plain sheet composed of a material which is sufficiently flexible to be wrapped around the substrate and which has opposing edge portions; and

(b)    one or more plain sheet closure devices, each
closure device comprising a pair of frictional
gripping elements and a means for interengaging
said frictional gripping elements, each frictional
gripping element having:

( i)    a channel member having a slit, which slit is
sufficiently wide to accommodate the thickness
of said plain sheet and extends along the
length of said channel member; and

(ii)    a rod member which is  positionable within
said channel member and when so positioned,
cooperates therewith to provide a conduit
thereinbetween and to apply frictional forces to
one edge portion of the plain sheet when the
edge portion has been inserted through said slit
and is in position between the rod member and
the channel member.

41.  An assembly according to Claim 40, having more than one
closure device, and wherein a plurality of channel members
cooperate with one rod member, which one rod member is at
least as long as the combined lengths of said plurality of
channel members.

42.  An assembly according to Claim 40, wherein the plain
sheet is comprised of one or. more of an organic polymer, a
metal and a foraminous material.

43.  An assembly according to Claim 42, wherein the flat
sheet is comprised of an elastomer.

44.  An assembly according to Claim 40, wherein the plain
sheet is comprised of a sheet of dimensionally-recoverable
polymeric material.

45.  An assembly according to Claim 42, wherein the dimensionally-
recoverable sheet is heat-shrinkable.

Fig. 1.

Fig. 2.

Fig.3.

Fig.3a.

Fig.4.

Fig.5.

Fig.6.

Fig.7.

*Fig. 8.*

*Fig. 9.*

Fig.10.

Fig.11a.

Fig.11b.

Fig.12a.

Fig.12b.

Fig.13a.

Fig.13b.

Fig.14a.

Fig.14b.

Fig.15a.

Fig.15b.

Fig.15c.

Fig.16.

Fig.17a.

Fig.17b.

Fig.17c.

Fig.17d.

Fig.17e.

Fig.17f.